# EUROPÄISCHE PATENTANMELDUNG

(11) **EP 1 388 693 A2**
(43) Veröffentlichungstag der Anmeldung: **11.02.2004**
(21) Anmeldenummer: 03016956.9
(22) Anmeldetag: 25.07.2003
(51) Int. Cl.: F16J 15/16

(54) **Wellendichtung**

(30) Priorität: 09.08.2002 DE 10236588
(71) Anmelder: LEDERLE GmbH PUMPEN- UND MASCHINENFABRIK, 79194 Gundelfingen (DE)
(72) Erfinder: Hahn, Karl Heinz, 79110 Freiburg (DE)
(74) Vertreter: Maucher, Wolfgang, Dipl.-Ing.

(57) **Zusammenfassung**

Die Erfindung betrifft eine Wellendichtung zur Abdichtung einer Welle (5, 6), die eine Gehäuseöffnung (7, 8 ) durchsetzt, wobei die Welle (5, 6) durch die Gehäuseöffnung (7, 8) von einem Gehäuse-Innenraum (2) in einen außerhalb des Gehäuse-Innenraums angeordneten Bereich geführt ist, welcher Gehäuse-Innenraum (2) zumindest bereichsweise mit einem flüssigen oder pastösen Medium gefüllt ist.

Für die erfindungsgemäße Wellendichtung ist kennzeichnend, dass die Welle (5, 6) im Bereich der Gehäuseöffnung (7, 8) einen Gewindeabschnitt (9, 10) hat, dass der Gewindeabschnitt (9, 10) an der Welle (5, 6) mit zumindest einem zweiten, drehbar gelagerten Gewindeabschnitt (10, 9) kämmt und dass diese Gewindeabschnitte (9, 10) zur selbstrückführenden Gewindeabdichtung gegenfördernde Gewinde aufweisen (vgl. Fig. 3).

## Beschreibung

Die Erfindung betrifft eine Wellendichtung zur Abdichtung einer Welle, die eine Gehäuseöffnung durchsetzt, wobei die Welle durch die Gehäuseöffnung von einem Gehäuse-Innenraum in einen außerhalb des Gehäuse-Innenraums angeordneten Bereich geführt ist, welcher Gehäuse-Innenraum zumindest bereichsweise mit einem flüssigen oder pastösen Medium gefüllt ist.

Bei Förderpumpen, die zum Fördern mittel- bis hochviskoser Produkte bestimmt sind, kann es schwierig sein, die Wellen mittels Gleitringdichtungen, Packungen und Drosselstrecken oder sonstigen Abdichtungen befriedigend abzudichten, ohne eine zu große Leckage zu haben.

Es besteht daher insbesondere die Aufgabe, eine Wellenabdichtung der eingangs erwähnten Art zu schaffen, mit der eine Welle auch auf kurzen Dichtstrecken selbst gegen hohe Förderdrücke abgedichtet werden kann.

Die erfindungsgemäße Lösung dieser Aufgabe besteht bei der Wellendichtung der eingangs erwähnten Art insbesondere darin, dass die Welle im Bereich der Gehäuseöffnung einen Gewindeabschnitt hat, dass der Gewindeabschnitt an der Welle mit zumindest einem zweiten, drehbar gelagerten Gewindeabschnitt kämmt, und dass die Gewindeabschnitte zur selbstrückführenden Gewindeabdichtung gegenfördernde Gewinde aufweisen.

Die erfindungsgemäße Wellendichtung sieht vor, dass die abzudichtende Welle einen Gewindeabschnitt trägt. Dieser erste, an der abzudichtenden Welle vorgesehene Gewindeabschnitt kämmt mit einem zweiten Gewindeabschnitt, der drehbar gelagert ist. Um ein Austreten des im Gehäuse-Innenraum befindlichen Mediums durch die Wellenöffnung zu verhindern und um das Medium aus dem Bereich der Wellenöffnung beispielsweise in den Gehäuse-Innenraum rückzuführen, weisen die miteinander kämmenden Gewindeabschnitte gegenfördernde Gewinde auf. Die erfindungsgemäße Wellenabdichtung verhindert somit wirkungsvoll ein Austreten des Mediums, wobei die erfindungsgemäße Wellendichtung auch auf kurzen Dichtstrecken eine Abdichtung der Welle selbst gegen hohe Förderdrücke erlaubt.

Möglich ist es, dass der zweite Gewindeabschnitt scheibenförmig ausgestaltet ist und lediglich in einer formangepassten Gehäuseaussparung umläuft. Die Leistungsfähigkeit der erfindungsgemäßen Wellenabdichtung wird jedoch dauerhaft erhöht, wenn der zweite Gewindeabschnitt auf einer zur Welle koaxialen zweiten Welle vorgesehen ist, welche zweite Welle im Gehäuse drehbar gelagert ist.

Um das Medium aus dem Bereich der Wellendichtung heraus beispielsweise in den Gehäuse-Innenraum rückführen zu können, ist es zweckmäßig, wenn im Bereich der Berührungszone der miteinander kämmenden Gewinde wenigstens ein Ablaufkanal vorgesehen ist. Die von den miteinander kämmenden Gewindeabschnitten erfasste Teilmenge des Mediums wird dort verdichtet und von den Gewindeabschnitten pumpenartig in den wenigstens einen Ablaufkanal gepresst, über den diese Teilmenge anschließend in den Gehäuse-Innenraum und dort beispielsweise in den Saugbereich einer Pumpe zum Förderstrom gezielt rückgeführt werden kann.

Eine bevorzugte Ausführungsform gemäß der Erfindung sieht vor, dass die Gewinde der Gewindeabschnitte als Trapezgewinde ausgestaltet sind.

Eine besonders gute Abdichtung lässt sich erzielen, wenn die Gewindeabschnitte scheibenförmig ausgestaltet sind. Um eine Abdichtung gegenüber der dem Gehäuse-Innenraum abgewandten Seite der Wellenabdichtung zu erreichen, ist vorgesehen, dass die Gewindeabschnitte jeweils in etwa formangepassten Gehäuseaussparungen umlaufen. Demgegenüber kann der erste und/oder der zweite Gewindeabschnitt zumindest auf der einem Lagerträger zugewandten Seite jeweils durch eine anliegende ringförmige Flachscheibe abgedichtet sein, die ein gezieltes Abführen auch einer eventuellen Restleckage erlaubt.

Dabei sieht eine besonders vorteilhafte Ausführungsform gemäß der Erfindung vor, dass zumindest eine der einen Gewindeabschnitt aufnehmenden Gehäuseaussparungen mit wenigstens einem Restleckagekanal zum Abführen einer Restleckage der Wellenabdichtung verbunden ist.

Ein bevorzugter Anwendungsbereich der erfindungsgemäßen Wellenabdichtung sieht vor, dass diese als Abdichtung eines Pumpengehäuses ausgestaltet ist. Dabei bietet es sich an, dass auf zumindest einer der Wellen ein Verdränger oder dergleichen Fördermittel drehfest gehalten ist.

Besonders vorteilhaft ist es, wenn die Pumpe als Spindelpumpe, Schraubenspindelpumpe oder Kreiskolbenpumpe ausgestaltet ist und wenn auf den die miteinander kämmenden Gewindeabschnitte tragenden Wellen jeweils eine Pumpspindel, ein Kolben oder dergleichen Verdränger sitzt.

Die hohe Leistungsfähigkeit der erfindungsgemäßen Wellenabdichtung wird noch begünstigt, wenn die Gewindeabschnitte das Medium zur Saugseite der Pumpe fördern. Dabei wird die von der erfindungsgemäßen Wellendichtung erfasste Teilmenge des Fördermediums verdichtet und in den Hauptförderstrom der Pumpe rückgeführt.

Weitere Merkmale der Erfindung ergeben sich aus der folgenden Beschreibung eines erfindungsgemäßen Ausführungsbeispieles in Verbindung mit den Ansprüchen sowie der Zeichnung.

Es zeigt in schematischer Darstellung:
- Fig. 1: eine Zahnradpumpe mit zwei miteinander kämmenden Pumpenrädern in einer Frontansicht auf die Pumpenrädern,
- Fig. 2: die Zahnradpumpe aus Fig. 1 in einem Längsschnitt, und
- Fig. 3: die Zahnradpumpe aus den Fig. 1 und 2 in einem Querschnitt.

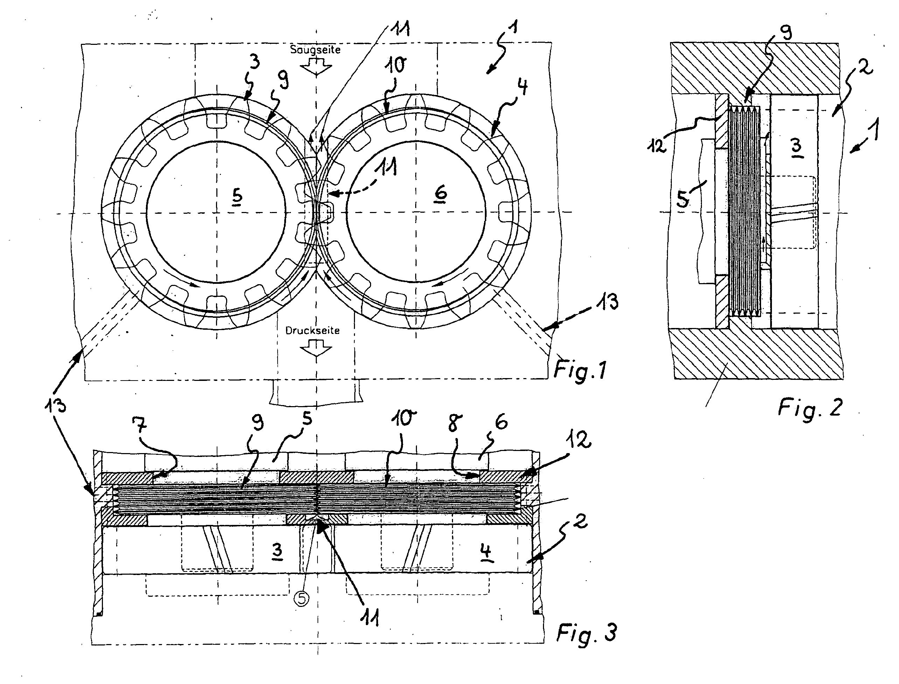

In den Fig. 1 bis 3 ist eine Zahnradpumpe 1 in unterschiedlichen Ansichten dargestellt. Die Zahnradpumpe 1 weist in dem auch als Pumpraum dienenden Gehäuse-Innenraum 2 zwei als Verdränger dienende Zahnräder 3, 4 auf, die miteinander kämmen. Die Zahnräder 3, 4 sind auf zwei koaxial zueinander angeordneten Wellen 5, 6 vorgesehen, die vom Gehäuse-Innenraum 2 aus durch jeweils eine Gehäuseöffnung 7,8 hindurch in einen außerhalb des Pumpraums angeordneten Bereich geführt sind. Der Gehäuse-Innenraum 2 ist mit einem zähflüssigen oder hochpastösen Fördermedium gefüllt.

Um ein Austreten des Fördermediums durch die Gehäuseöffnungen 7, 8 zu vermeiden, ist im Bereich dieser Gehäuseöffnungen 7, 8 eine Wellendichtung vorgesehen. An der dem einen Zahnrad 3 zugeordneten Welle 5 ist dazu ein Gewindeabschnitt 9 drehfest und dicht gehalten, der mit dem Gewindeabschnitt 10 an der dem anderen Zahnrad 4 zugeordneten zweiten Welle 6 kämmt.

In Fig. 1 ist angedeutet, dass die Gewindeabschnitte 9, 10 zur selbstrückführenden Gewindeabdichtung gegenfördernde Gewinde aufweisen. Die hier dargestellte Wellendichtung verhindert somit wirkungsvoll ein Austreten des Mediums, wobei die Wellendichtung auf einer kurzen Dichtstrecke eine Abdichtung der Welle selbst gegen hohe Förderdrücke erlaubt.

Im Bereich der Berührungszone der miteinander kämmenden Gewinde ist ein Ablaufkanal 11 vorgesehen. Somit wird die von den Gewindeabschnitten 9, 10-im Bereich der Gehäuseöffnungen 7, 8 erfasste Teilmenge des Fördermediums verdichtet und durch den Ablauf 11 zur Saugseite der Pumpe 1 rückgeführt.

Die Gewindeabschnitte 9, 10 sind scheibenförmig ausgestaltet und laufen in formangepassten Gehäuse-Aussparungen um, welche die Abdichtung nach außen bewerkstelligen. Die Abdichtung auf der einem Lagerträger zugewandten Seite übernehmen ringförmige Flachscheiben 12, die jeweils an einem der Gehäuseabschnitte 9, 10 anliegen. Um eine eventuelle Restleckage gegebenenfalls kontrolliert abführen zu können, sind die den Gewindeabschnitten 9, 10 zugeordneten Gehäuse-Aussparungen jeweils mit einem Restleckagekanal 13 verbunden.

Die Gewindeabschnitte 9, 10 weisen ein Trapezgewinde auf, dessen Steigung an die Viskosität des in der Pumpe 1 geförderten Mediums angepasst ist.

Die Wellen 5, 6 stehen in Antriebsverbindung. Bei der hier gezeigten Ausführungsform sind dazu an den außerhalb des Pumpraums 2 angeordneten Wellenabschnitten miteinander kämmende, hier aber nicht dargestellte Antriebs-Zahnräder vorgesehen.

Mit Hilfe der hier dargestellten Wellendichtungen ist es möglich, selbst hohe Förderdrücke auch auf kurzen Dichtstrecken abzudichten. Dabei kann die hier dargestellte Wellendichtung bei Spindel- beziehungsweise Schraubenspindelpumpen, Kreiskolbenpumpen oder anderen Pumpentypen vorteilhaft eingesetzt werden. Ebenso ist die hier dargestellte Wellendichtung bei allen Pumpen einsetzbar, die eventuell lediglich zur Abdichtung eine zweite, mitlaufende Welle haben. Die hier dargestellte Wellendichtung kann aber auch über den Pumpenbereich hinaus überall dort eingesetzt werden, wo zumindest eine Welle abzudichten ist, wobei diese abzudichtende Welle einen Gewindeabschnitt hat, der mit einem drehbar gelagerten zweiten Gewindeabschnitt kämmt.

## Patentansprüche

1. Wellendichtung zur Abdichtung einer Welle, die eine Gehäuseöffnung durchsetzt, wobei die Welle durch die Gehäuseöffnung von einem Gehäuse-Innenraum in einen außerhalb des Gehäuse-Innenraums angeordneten Bereich geführt ist, welcher Gehäuse-Innenraum zumindest bereichsweise mit einem flüssigen oder pastösen Medium gefüllt ist, **dadurch gekennzeichnet, dass** die Welle (5, 6) im Bereich der Gehäuseöffnung (7, 8) einen Gewindeabschnitt (9, 10) hat, dass der Gewindeabschnitt (9, 10) an der Welle (5, 6) mit zumindest einem zweiten, drehbar gelagerten Gewindeabschnitt (10, 9) kämmt und dass diese Gewindeabschnitte zur selbstrückführenden Gewindeabdichtung gegenfördernde Gewinde aufweisen.

2. Wellendichtung nach Anspruch 1, **dadurch gekennzeichnet, dass** der zweite Gewindeabschnitt (10, 9) auf einer zur Welle (5, 6) koaxialen zweiten Welle (6, 5) vorgesehen ist, welche zweite Welle (6, 5) im Gehäuse drehbar gelagert ist.

3. Wellendichtung nach Anspruch 1 oder 2, **dadurch gekennzeichnet, dass** im Bereich der Berührungszone der miteinander kämmenden Gewinde wenigstens ein Ablaufkanal (11) vorgesehen ist.

4. Wellendichtung nach einem der Ansprüche 1 bis 3, **dadurch gekennzeichnet, dass** die Gewinde als Trapezgewinde ausgestaltet sind.

5. Wellendichtung nach einem der Ansprüche 1 bis 4, **dadurch gekennzeichnet, dass** die Gewindeabschnitte (9, 10) scheibenförmig ausgestaltet sind.

6. Wellendichtung nach einem der Ansprüche 1 bis 5, **dadurch gekennzeichnet, dass** die Gewindeabschnitte (9, 10) jeweils in etwa formangepassten Gehäuseaussparungen umlaufen.

7. Wellendichtung nach einem der Ansprüche 1 bis 6, **dadurch gekennzeichnet, dass** der erste und/oder der zweite Gewindeabschnitt (9, 10) zumindest auf der einem Lagerträger zugewandten Seite jeweils durch eine anliegende ringförmige Flachscheibe (12) abgedichtet ist.

8. Wellendichtung nach einem der Ansprüche 1 bis 7, **dadurch gekennzeichnet, dass** zumindest eine der einen Gewindeabschnitt (9, 10) aufnehmenden Gehäuseaussparungen mit wenigstens einem Restleckagekanal (13) zum Abführen einer Restleckage der Wellendichtung verbunden ist.

9. Wellendichtung nach einem der Ansprüche 1 bis 8, **dadurch gekennzeichnet, dass** die Wellendichtung als Abdichtung eines Pumpengehäuses ausgestaltet ist.

10. Wellendichtung nach einem der Ansprüche 1 bis 9, **dadurch gekennzeichnet, dass** auf zumindest einer der Wellen (5, 6) ein Pumpenlaufrad, ein Verdränger oder dergleichen Fördermittel drehfest gehalten ist.

11. Wellendichtung nach einem der Ansprüche 1 bis 10, **dadurch gekennzeichnet, dass** die Pumpen als Spindelpumpe, Schraubenspindelpumpe oder Kreiskolbenpumpe ausgestaltet ist und dass auf den die miteinander kämmenden Gewindeabschnitte (9, 10) tragenden Wellen (5, 6) jeweils eine Pumpspindel, ein Kolben oder dergleichen Verdränger sitzt.

12. Wellendichtung nach einem der Ansprüche 1 bis 11, **dadurch gekennzeichnet, dass** die Gewindeabschnitte (9, 10) das Medium zur Saugseite der Pumpe fördern.
